# FASCICULE DE BREVET EUROPEEN

(11) **EP 0 722 209 B1**
(45) Date de publication et mention de la délivrance du brevet: **24.03.1999**
(21) Numéro de dépôt: 96400074.9
(22) Date de dépôt: 12.01.1996
(51) Int. Cl.: H02K 5/14, H02K 5/10

(54) **Machine électrique tournante munie de moyens perfectionnés d'assemblage et d'étanchéité**
Elektrische drehende Maschine mit verbesserten Verbindungs- und Dichtungsmitteln
Rotary electric machine with improved connecting and sealing means

(30) Priorité: 13.01.1995 FR 9500426
(43) Date de publication de la demande: 17.07.1996
(73) Titulaire: VALEO EQUIPEMENTS ELECTRIQUES MOTEUR, 94000 Créteil (FR)
(72) Inventeur: Glerean, André, F-69270 Saint-Martin (FR); Boucaud, Ludovic, F-69650 Quincieux (FR); Piaud, Eric, F-69003 Lyon (FR)
(74) Mandataire: Gamonal, Didier

(56) Documents cités:
- DE-A- 3 516 213
- FR-A- 2 271 693
- GB-A- 2 004 423
- US-A- 1 991 356
- US-A- 3 745 393
- US-A- 4 922 149

## Description

L'invention concerne une machine électrique tournante munie de moyens perfectionnés d'assemblage et d'étanchéité.

L'invention concerne plus particulièrement une machine électrique tournante du type comportant une culasse tubulaire qui supporte un stator, un palier formant couvercle qui supporte à rotation l'arbre d'un rotor et qui ferme de manière étanche la culasse à l'une de ses extrémités axiales et une plaque porte-balais agencée en regard de la face interne du palier.

Il est connu de monter la plaque porte-balais sur le palier à l'intérieur de l'espace délimité par la culasse et le palier.

Pour un bon fonctionnement des éléments d'une machine électrique tournante selon cette conception, il faut d'une part assurer une bonne coaxialité entre le palier et la culasse et d'autre part, par des moyens complémentaires, assurer le centrage de la plaque porte-balais sur le palier.

Il est par ailleurs nécessaire de positionner axialement le porte-balais par rapport au palier.

Selon une conception connue d'une machine électrique tournante, il peut être fait appel pour cette fixation à des vis ou des clips. On peut aussi prévoir de maintenir la plaque porte-balais contre une surface de butée de la culasse par des moyens élastiques disposés entre le palier et la plaque porte-balais.

De telles machines électriques tournantes conçues selon l'art antérieur sont connues des documents GB-A-2 004 423 et US-A-1 991 356.

Il résulte donc de cette conception une multiplication des moyens mis en oeuvre pour la fixation et le centrage relatif de la culasse, du palier et de la plaque porte-balais.

La présente invention a pour but de proposer une nouvelle conception d'une machine électrique tournante qui permet d'obtenir en une seule opération la fixation et le centrage du palier, de la plaque porte-balais et de la culasse ainsi que l'étanchéité de leur assemblage.

Dans ce but, l'invention propose une machine électrique tournante du type comportant une culasse tubulaire qui supporte un stator, un palier formant couvercle qui supporte à rotation l'arbre d'un rotor et qui ferme de manière étanche la culasse à l'une de ses extrémités axiales, et une plaque porte-balais agencée en regard de la face interne du palier, la plaque porte-balais étant montée serrée entre la face interne du palier et l'extrémité de la culasse, et la face interne du palier comportant des plots de centrage qui coopèrent avec la surface cylindrique interne de la culasse, caractérisée en ce que les plots du palier sont agencés sur un cercle, sont répartis angulairement de façon régulière et traversent des orifices de centrage de la plaque porte-balais.

Selon d'autres caractéristiques de l'invention :
- il est prévu des moyens d'étanchéité disposés entre le palier et la plaque porte-balais et entre la plaque porte-balais et la culasse ;
- les moyens d'étanchéité sont réunis sous la forme d'une coupelle d'étanchéité unique ;
- la coupelle présente, en section axiale, une forme de L dont une branche radiale est pincée de manière étanche entre deux surfaces annulaires en vis-à-vis de la plaque porte-balais et du palier et dont l'autre branche s'étend axialement au-delà de la plaque porte-balais, l'extrémité libre de cette branche axiale étant munie d'au moins une lèvre d'étanchéité qui coopère avec la surface cylindrique externe de la culasse ;
- la plaque porte-balais est montée serrée entre la face annulaire d'extrémité de la culasse et une surface de portée du palier, la surface de portée étant décalée axialement vers l'intérieur de la culasse par rapport à la surface annulaire de contact entre le palier et la branche radiale de la coupelle de manière à limiter le pincement axial de la coupelle ;
- la branche radiale de la coupelle comporte une gorge circulaire dans sa zone de raccordement avec la branche axiale ;
- le diamètre externe de la plaque porte-balais est supérieur au diamètre externe de la culasse et le bord périphérique de la plaque porte-balais est en contact avec la face en vis-à-vis de la branche axiale de la coupelle.
- la culasse est fermée à son autre extrémité par un deuxième palier et il est prévu des moyens de fixation de type vis-écrou, disposés axialement à l'extérieur de la culasse, qui serrent les deux paliers.

D'autres avantages de l'invention apparaîtront à la lecture de la description détaillée qui suit et pour la compréhension de laquelle on se reportera aux dessins annexés dans lesquels :
- La figure 1 est une vue éclatée des éléments principaux d'une machine électrique tournante selon l'invention dont un est représenté en perspective et deux sont représentés en section axiale ;
- la figure 2 est une vue en section axiale de l'assemblage des mêmes éléments d'une machine électrique tournante ;
- la figure 3 est une vue agrandie d'une zone de la figure 2 détaillant la réalisation particulière de la coupelle d'étanchéité selon l'invention.

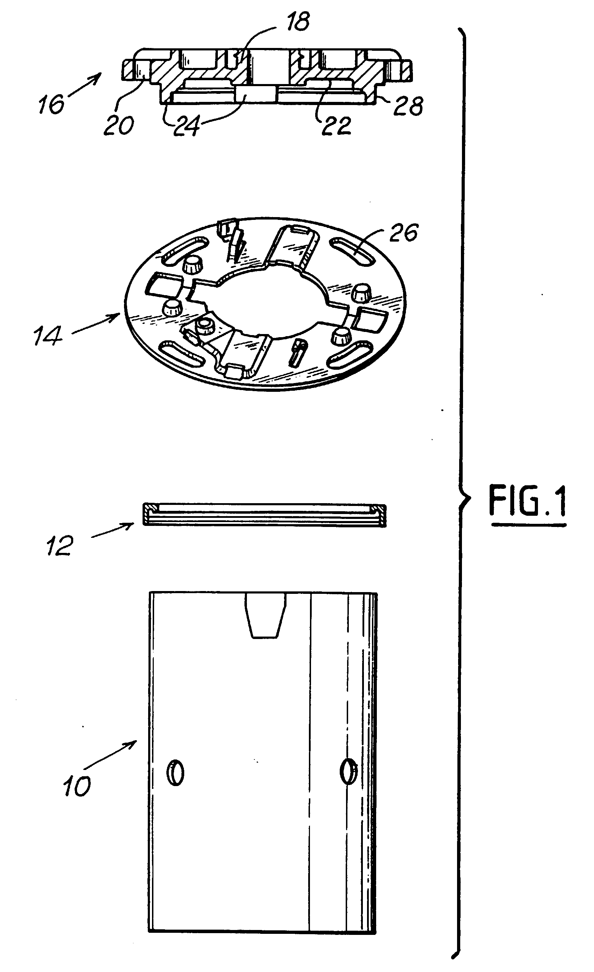

Sur la figure 1, on distingue une culasse 10, une coupelle d'étanchéité 12, une plaque porte-balais 14 et un palier 16 d'une machine électrique tournante conforme aux enseignements de l'invention.

La culasse 10 est sensiblement tubulaire, ouverte à ses deux extrémités et elle est prévue pour recevoir un bobinage statorique.

Le palier 16 est un élément en forme générale de disque comportant en son centre une douille 18 destinée à recevoir à rotation un arbre d'un rotor (non représenté). Le palier 16 comporte également à sa périphérie une série de trous 20 destinés à recevoir des vis de fixation (non représentées).

Le palier 16 comporte par ailleurs sur sa face interne 22, tournée vers la culasse, une série de plots de centrage 24 disposés selon un cercle et répartis angulairement de manière uniforme.

Les plots 24 sont destinés à être reçus dans des orifices 26 correspondants de la plaque porte-balais 14.

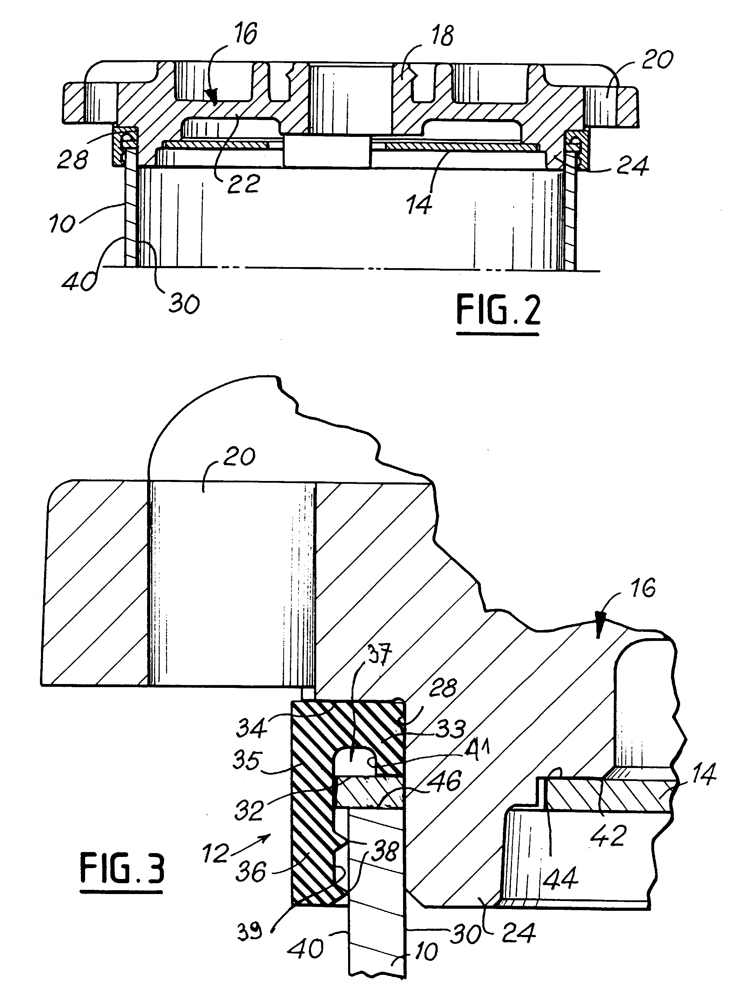

Sur les figures 2 et 3 sont représentés les éléments précédents une fois assemblés.

Le palier 16, formant couvercle, ferme la culasse 10 à l'une de ses extrémités, la plaque porte-balais 14 étant interposée et montée serrée entre ces deux éléments.

Il existe un deuxième palier (non représenté) qui ferme la culasse 10 à son autre extrémité. La fixation de l'ensemble est assurée par des vis non représentées, disposées axialement à l'extérieur de la culasse 10 et qui relient les deux paliers de manière à serrer la culasse 10 et la plaque porte-balais 14.

La plaque porte-balais 14 est centrée sur la face extérieure latérale 28 des plots 24 qui traversent la plaque porte-balais 14 par les orifices de profils complémentaires correspondants 26.

Le palier 16 est lui-même centré dans la culasse 10 par ses plots 24 qui coopèrent avec la surface cylindrique interne 30 de la culasse.

La plaque porte-balais 14 est ainsi serrée entre la surface annulaire d'extrémité 46 de la culasse 10 et une surface annulaire de portée 42 du palier 16 qui prend appui sur une portion en vis-à-vis de la face supérieure 44 de la plaque 14.

Afin de réaliser l'étanchéité de l'assemblage il est prévu une coupelle d'étanchéité 12 conforme aux enseignements de l'invention.

La coupelle 12 est de forme générale annulaire et présente, en section axiale, une forme en L.

Une première branche radiale 33 du L se trouve pincée entre une portion de surface périphérique annulaire 32 de la face supérieure 44 de la plaque porte-balais 14 et une surface annulaire de contact 34 en vis-à-vis de la face interne 22 du palier 16.

La deuxième branche 35 du L s'étend axialement, à l'extérieur de l'enceinte délimitée par la culasse 10 et le palier 16, au-delà de la plaque porte-balais 14 et comporte à son extrémité libre 36 deux lèvres d'étanchéité 38 agencées sur la face interne 39 et qui prennent appui de manière étanche sur la surface cylindrique externe 40 de la culasse 10.

A sa jonction avec la branche axiale 35, la branche radiale 33 présente, dans sa face interne 41 en contact avec la surface 32, une gorge axiale 37 qui permet à la branche axiale 35 de pivoter légèrement dans le sens anti-horaire en considérant la figure 3.

La face interne 39 de la branche axiale 35 est par ailleurs en contact radial avec le bord périphérique de la plaque porte-balais 14 dont le diamètre externe est supérieur au diamètre externe de la culasse 10.

Il est ainsi possible de maîtriser la pression de contact des lèvres d'étanchéité 38 sur la culasse 10.

Le pincement de la coupelle 12 entre le palier 16 et la plaque porte-balais 14 est lui limité par la disposition relative des surfaces annulaire externe 34 de contact et de portée 42 du palier 16 qui sont décalées axialement.

La coupelle 12 est ainsi tenue axialement et assure l'étanchéité complète de l'assemblage.

## Revendications

1. Machine électrique tournante du type comportant une culasse (10) tubulaire qui supporte un stator, un palier (16) formant couvercle qui supporte à rotation l'arbre d'un rotor et qui ferme de manière étanche la culasse (10) à l'une de ses extrémités axiales, et une plaque porte-balais (14) agencée en regard de la face interne (22) du palier (16), la plaque porte-balais (14) étant montée serrée entre la face interne (22) du palier (16) et l'extrémité de la culasse (10), et la face interne (22) du palier (16) comportant des plots (24) de centrage qui coopèrent avec la surface cylindrique interne (30) de la culasse (10), caractérisée en ce que les plots (24) du palier (16) sont agencés sur un cercle, sont répartis angulairement de façon régulière et traversent des orifices (26) de centrage de la plaque porte-balais (14).

2. Machine électrique tournante selon la revendication 1, caractérisée en ce qu'il est prévu des moyens d'étanchéité disposés entre le palier (16) et la plaque porte-balais (14) et entre la plaque porte-balais (14) et la culasse (10).

3. Machine électrique tournante selon la revendication 2, caractérisée en ce que les moyens d'étanchéité sous réunis sous la forme d'une coupelle (12) unique.

4. Machine électrique tournante selon la revendication 3, caractérisé en ce que la coupelle (12) présente en section axiale une forme de L dont une branche radiale (33) est pincée de manière étanche entre deux surfaces annulaires (32, 34) en vis-à-vis de la plaque porte-balais (14) et du palier (16) et dont l'autre branche (35) s'étend axialement au-delà de la plaque porte-balais (14), l'extrémité libre (36) de cette branche axiale (35) étant munie d'au moins une lèvre d'étanchéité (38) qui coopère avec la surface cylindrique externe (40) de la culasse (10).

5. Machine électrique tournante selon l'une quelconque des revendications précédentes, caractérisée en ce que la plaque porte-balais (14) est montée serrée entre la face annulaire d'extrémité (46) de la culasse (10) et une surface de portée (42) du palier (16), la surface de portée (42) étant décalée axialement vers l'intérieur de la culasse (10) par rapport à la surface annulaire (34) de contact entre le palier (16) et la branche radiale de la coupelle (12) de manière à limiter le pincement axial de la coupelle (12).

6. Machine électrique tournante selon la revendication 5, caractérisée en ce que la branche radiale (33) de la coupelle (12) comporte une gorge circulaire (37) dans sa zone de raccordement avec la branche axiale (35).

7. Machine électrique tournante selon la revendication 6, caractérisée en ce que le diamètre externe de la plaque porte-balais (14) est supérieur au diamètre externe de la culasse (10) et le bord périphérique de la plaque porte-balais (14) est en contact avec la face en vis-à-vis (39) de la branche axiale (35) de la coupelle (12).

8. Machine électrique tournante selon l'une quelconque des revendications précédentes, caractérisée en ce que la culasse (10) est fermée à son autre extrémité par un deuxième palier et en ce qu'il est prévu des moyens de fixation de type vis-écrou, disposés axialement à l'extérieur de la culasse (10), qui serrent les deux paliers.

## Patentansprüche

1. Rotierende elektrische Maschine, umfassend ein rohrförmiges Joch (10), das einen Ständer trägt, ein als Deckel dienendes Lager (16), das die drehbar gelagerte Welle eines Läufers trägt und das das Joch (10) an einem seiner axialen Enden dicht verschließt, und eine gegenüber der Innenfläche (22) des Lagers (16) angeordnete Bürstenhalterplatte (14), wobei die Bürstenhalterplatte (14) zwischen der Innenfläche (22) des Lagers (16) und dem Ende des Jochs (10) eingespannt eingebaut ist und wobei die Innenfläche (22) des Lagers (16) Zentrieransätze (24) umfaßt, die mit der zylindrischen Innenfläche (30) des Jochs (10) zusammenwirken, **dadurch gekennzeichnet,** daß die Ansätze (24) des Lagers (16) auf einem Kreis angeordnet und winklig gleichmäßig verteilt sind und durch Zentrieröffnungen (26) der Bürstenhalterplatte (14) hindurchgehen.

2. Rotierende elektrische Maschine nach Anspruch 1, **dadurch gekennzeichnet,** daß Dichtungsmittel vorgesehen sind, die zwischen dem Lager (16) und der Bürstenhalterplatte (14) und zwischen der Bürstenhalterplatte (14) und dem Joch (10) angeordnet sind.

3. Rotierende elektrische Maschine nach Anspruch 2, **dadurch gekennzeichnet,** daß die Dichtungsmittel in Form eines einzigen Dichtungstellers (12) verbunden sind.

4. Rotierende elektrische Maschine nach Anspruch 3, **dadurch gekennzeichnet,** daß der Dichtungsteller (12) im Axialschnitt eine L-Form aufweist, von der ein radialer Schenkel (33) dicht zwischen zwei gegenüberliegenden ringförmigen Flächen (32, 34) der Bürstenhalterplatte (14) und des Lagers (16) eingeklemmt ist und deren anderer Schenkel (35) sich axial über die Bürstenhalterplatte (14) hinaus erstreckt, wobei das freie Ende (36) dieses axialen Schenkels (35) mit wenigstens einer Dichtlippe (38) versehen ist, die mit der zylindrischen Außenfläche (40) des Jochs (10) zusammenwirkt.

5. Rotierende elektrische Maschine nach einem der vorangehenden Ansprüche, **dadurch gekennzeichnet,** daß die Bürstenhalterplatte (14) zwischen der ringförmigen Abschlußfläche (46) des Jochs (10) und einer Auflagefläche (42) des Lagers (16) eingespannt eingebaut ist, wobei die Auflagefläche (42) im Verhältnis zur ringförmigen Kontaktfläche (34) zwischen dem Lager (16) und dem radialen Schenkel des Dichtungstellers (12) axial nach innen versetzt ist, um die axiale Einklemmung des Dichtungstellers (12) zu begrenzen.

6. Rotierende elektrische Maschine nach Anspruch 5, **dadurch gekennzeichnet**, daß der radiale Schenkel (33) des Dichtungstellers (12) eine kreisförmige Auskehlung (37) in seinem Anschlußbereich an den axialen Schenkel (35) umfaßt.

7. Rotierende elektrische Maschine nach Anspruch 6, **dadurch gekennzeichnet,** daß der Außendurchmesser der Bürstenhalterplatte (14) größer als der Außendurchmesser des Jochs (10) ist und die Umfangskante der Bürstenhalterplatte (14) mit der gegenüberliegenden Fläche (39) des axialen Schenkels (35) des Dichtungstellers (12) in Kontakt steht.

8. Rotierende elektrische Maschine nach einem der vorangehenden Ansprüche, **dadurch gekennzeichnet,** daß das Joch (10) an seinem anderen Ende durch ein zweites Lager verschlossen ist und daß axial außerhalb des Jochs (10) angeordnete Befestigungsmittel des Typs Schraube-Mutter vorgesehen sind, die die beiden Lager einspannen.

## Claims

1. A rotary electrical machine of the type having a tubular body (10) which supports a stator, a bearing (16) constituting a cover, which supports a rotor shaft rotatably and which sealingly closes the body (10) at one of its axial ends, and a brush carrier plate (14) which is disposed facing the internal surface (22) of the bearing (16), the brush carrier plate (14) being held gripped between the internal surface (22) of the bearing (16) and the end of the body (10), and the internal surface (22) of the bearing (16) having centring pads (24) which cooperate with the cylindrical inner surface (30) of the body (10), characterised in that the pads (24) of the bearing (16) are arranged on a circle, being spaced apart circumferentially at regular intervals, and extend through centring apertures (26) of the brush carrier plate (14).

2. A rotary electrical machine according to Claim 1, characterised in that sealing means are arranged which are disposed between the bearing (16) and the brush carrier plate (14), and between the brush carrier plate (14) and the body (10).

3. A rotary electrical machine according to Claim 2, characterised in that the sealing means are combined in the form of a single shallow cup member (12).

4. A rotary electrical machine according to Claim 3, characterised in that the cup member (12) has an L-shaped axial cross section with one radial branch (33) sealingly pinched between two annular surfaces (32, 34) in facing relationship with the brush carrier plate (14) and the bearing (16), with its other branch (35) extending axially beyond the brush carrier plate (14), the free end (36) of the said axial branch (35) being provided with at least one sealing lip (38) which cooperates with the outer cylindrical surface (40) of the body (10).

5. A rotary electrical machine according to any one of the preceding Claims, characterised in that the brush carrier plate (14) is held gripped between the annular end face (46) of the body (10) and a support surface (42) of the bearing (16), the support surface (42) being offset axially towards the inside of the body (10) with respect to the annular surface (34) of contact between the bearing (16) and the radial branch of the cup member (12), whereby to limit the axial gripping of the cup member (12).

6. A rotary electrical machine according to Claim 5, characterised in that the radial branch (33) of the cup member (12) has a circular groove (37) in its zone of junction with the axial branch (35).

7. A rotary electrical machine according to Claim 6, characterised in that the outer diameter of the brush carrier plate (14) is greater than the outer diameter of the body (10), and the peripheral edge of the brush carrier plate (14) is in contact with the facing surface (39) of the axial branch (35) of the cup member (12).

8. A rotary electrical machine according to any one of the preceding Claims, characterised in that the body (10) is closed at its other end by a second bearing, and in that fastening means of the screw and nut type are provided, being disposed axially on the outside of the body (10), for securing the two bearings together.
